# EUROPÄISCHE PATENTSCHRIFT

(11) **EP 1 555 451 B1**
(45) Veröffentlichungstag und Bekanntmachung des Hinweises auf die Patenterteilung: **30.09.2009**
(21) Anmeldenummer: 04029923.2
(22) Anmeldetag: 17.12.2004
(51) Int. Cl.: F16D 25/0635, F16D 25/10, F16D 67/04

(54) **Kupplungsvorrichtung für eine mechanische Presse, Schere oder Stanzvorrichtung**
Clutch for mechanical press, scissors or punching device
Embrayage pour presse mécanique, ciseaux ou dispositif de poinçonnage

(30) Priorität: 14.01.2004 DE 102004001914
(43) Veröffentlichungstag der Anmeldung: 20.07.2005
(73) Patentinhaber: SMS Meer GmbH, 41069 Mönchengladbach (DE)
(72) Erfinder: Kreisl, Joachim, 51373 Leverkusen (DE); Gober, Norbert, 51519 Odenthal (DE)
(74) Vertreter: Grosse, Wolf-Dietrich Rüdiger

(56) Entgegenhaltungen:
- EP-B1- 0 797 739
- WO-A-00/43691
- DE-A1- 2 924 834
- DE-A1- 4 332 466
- US-A- 4 784 019

## Beschreibung

Die Erfindung betrifft eine Kupplungsvorrichtung zum Ankuppeln eines drehanzutreibenden Elements an ein drehantreibendes Element in einer mechanischen Presse, Schere oder Stanzvorrichtung zur Massiv- und/oder Blechumformung, wobei die Kupplungsvorrichtung zwei in Parallelschaltung unabhängig voneinander schaltbare Kupplungen aufweist.

Eine Kupplungsvorrichtung der gattungsgemäßen Art ist in der DE-OS 29 24 834 beschrieben. Daraus ist eine Doppelkupplung mit kombinierter Doppelbremse bekannt, um intermittierend arbeitende Maschinen, wie Pressen, Scheren, Stanzen u. ä., anzutreiben. Die Doppelkupplung besteht aus zwei voneinander unabhängig mittels eines Druckmediums einschaltbaren Kupplungen, sowie aus zwei voneinander unabhängig mittels Federkraft einschaltbaren Bremsen, die beide mit Hilfe des die Kupplungen betätigenden Druckmittels ausgeschaltet werden. Mit einer derartig ausgebildeten Doppelkupplung ist es möglich, hohe Sicherheitsansprüche zu erfüllen, wie sie für Kaltumformmaschinen zudem vorgeschrieben sind. Die bekannte Ausführung sieht zwei baugleich ausgebildete Kupplungen vor, die in der offenbarten Anordnung kombiniert eingesetzt werden.

Eine Kombination einer Kupplung mit einer Bremse zum Einsatz bei mechanisch arbeitenden Pressen und Scheren zur Massiv- und Blechumformung ist auch aus der EP 0 797 739 B1 bekannt. Die dort offenbarte Anordnung stellt darauf ab, dass zur getrennten Betätigung von Kupplung und Bremse die Kupplung mit sie lüftenden Kupplungsfedern und einem sie schließenden Kupplungskolben und die Bremse mit sie schließenden Druckfedern und einem sie lüftenden Bremskolben versehen ist. Dabei ist die Hohlachse mit sie durchsetzenden Kanälen für die Druckmittelzufuhr zum Druckraum der Bremse versehen.

Mit dieser Ausgestaltung wird eine Kupplungs- und Bremsanordnung geschaffen, die eine getrennte Betätigung von Kupplung und Bremse erlaubt, dennoch die Anordnung in kompakter Weise an einem Wellenende ermöglicht.

Mit den vorbekannten Lösungen wird allerdings folgendem Umstand nicht Rechnung getragen:

Diese bekannten Kupplungssysteme für mechanische Pressen, Scheren, Stanzvorrichtungen usw. haben den Nachteil, dass ihre Auslegung immer einen Kompromiss in Bezug auf das Anfahrverhalten einerseits und die Momentenübertragung andererseits fordert. Beim Anfahren einer Presse ist ein thermisch stabiles und verschleißminimiertes Kupplungssystem notwendig. Hierfür eignen sich in besonderer Weise flüssigkeitsgekühlte Reibpaarungen, die allerdings den spezifischen Reibwert und damit das maximal zu übertragende Drehmoment begrenzen. Bei der Erzeugung der Presskräfte wird demgegenüber im Verhältnis zum Anfahrprozess ein vielfaches Drehmoment benötigt. Hierfür empfiehlt sich der Einsatz einer trockenlaufenden Kupplung mit hohem spezifischen Reibwert.

Aus der DE 43 32 466 A1 ist eine konzentrisch zur Drehachse, die durch die Kurbelwelle einer Brennkraftmaschine vorgegeben ist, im radialen Abstand zwei voneinander unabhängig betätigbare Lamellenkupplungen besitzende Doppelkupplung bekannt. Die untere Lamellenkupplung ist über eine Nabe drehfest mit einer Welle verbunden, auf der die obere Lamellenkupplung über eine Nabe drehfest mit einer Hohlwelle verbunden ist, die um die Welle herum angeordnet ist. Die Lamellenkupplungen wirken somit nicht auf eine Welle, sondern jede Kupplung hat einen eigenen Abtrieb, nämlich die Hohlwelle und die in dieser separat gelagerte Innenwelle. Die beiden Kupplungen sind baugleich. Für die Herstellung aller ihrer Innen- bzw. Außenlamellen soll ein einteiliger Rohling verwendet werden, so dass diese Doppelkupplung nicht geeignet ist, unterschiedliche Drehmomente zu übertragen.

Durch die WO 00/43691 A1 ist in mehreren Varianten eine zur Übertragung unterschiedlicher Drehmomente in Parallelschaltung eine Reibungskupplung und eine Viscokupplung umfassende, steuerbare Kupplungseinrichtung für Kraftfahrzeugantriebe bekannt geworden.

Allen Varianten ist gemeinsam, dass beide Kupplungen von einem Aktuator, ausgeführt als Verstellvorrichtung mit Rampenscheiben an der einen bzw. anderen Kupplung und dazwischen angeordneten Kugeln, betätigt werden. Die mechanische Verstellvorrichtung kann die beiden Kupplungen stets nur in starrer Abfolge, jedoch nie unabhängig voneinander schalten.

Der Erfindung liegt daher die Aufgabe zugrunde, die Nachteile, die durch den genannten Kompromiss bedingt sind, zu überwinden. Es soll insbesondere eine Kupplungsvorrichtung für eine mechanische Presse, Schere oder Stanzvorrichtung zur Massiv- und Blechumformung geschaffen werden, die sich sowohl durch sehr gutes Anfahrverhalten als auch ein großes zu übertragendes Drehmoment auszeichnet.

Diese Aufgabe wird erfindungsgemäß mit den im kennzeichnenden Teil des unabhängigen Anspruchs angegebenen Merkmalen gelöst.

Durch die eine Kupplung soll ein günstiges Anfahrverhalten erreicht werden, bei dem es weniger auf ein hohes zu übertragendes Drehmoment als darauf ankommt, dass beim Anfahren in der Kupplung ein großer Schlupf bewältigt werden kann. Damit ist gemeint, dass die beiden anzukuppelnden Elemente, d. h. das drehanzutreibende Element und das drehantreibende Element, sich zunächst mit stark unterschiedlicher Drehzahl gegenüberstehen. Zu Beginn des Anfahrvorgangs hat das drehanzutreibende Element, beispielsweise in Form einer Kurbelwelle, die Drehzahl Null, während das drehantreibende Element, beispielsweise in Form eines Schwungrades, mit Nenndrehzahl rotiert.

Die andere Kupplung ist hingegen dazu vorgesehen, ein großes Nenndrehmoment zu übertragen, was nach dem Anfahrvorgang über die Kupplungsvorrichtung zu übertragen ist, um den Press-, Scher- bzw. Stanzvorgang durchzuführen. Der Schlupf ist bei diesem Teilprozess praktisch Null; allerdings muss ein hohes Drehmoment übertragen werden.

Beide Kupplungen sind als Reibkupplungen ausgebildet. Jede Kupplung weist Reibelemente auf, die unabhängig voneinander gesteuert oder geregelt mit einer vorgegebenen Anpresskraft beaufschlagbar sind. Die Beaufschlagung der Reibelemente kann mit einem pneumatisch oder hydraulisch arbeitenden Aktuator erfolgen.

Das Anfahren bzw. Beschleunigen kann in thermisch stabiler Umgebung und unten Minimierung des dabei entstehenden Verschleißes durchgeführt werden. Die flüssigkeitsgekühlte Reibpaarung (Nasskupplung) begünstigt die Realisierung dieses Systems. Der dabei relativ niedrige spezifische Reibwert ist unproblematisch. Zur Erzeugung der hohen Presskräfte, d. h. zum Übertragen eines hohen Drehmoments, kommt die Trockenkupplung zum Einsatz, was allerdings infolge des bei der hohen Drehmomentübertragung vorliegenden geringeren Schlupfs unproblematisch ist. Für jede Teilaufgabe lässt sich demnach eine jeweils optimierte Kupplung vorsehen.

Die Nasskupplung ist im Vergleich mit der Trockenkupplung vorzugsweise so ausgebildet, dass höchstens ein Drittel, vorzugsweise höchstens ein Viertel, des maximalen Drehmoments von ihr übertragen wird.

Mit der erfindungsgemäßen Kupplungsvorrichtung wird es möglich, die Teilfunktionen "Beschleunigen bzw. Anfahren" und "Drehmomentübertragen bei Nenndrehzahl" an Pressen, Scheren oder Stanzvorrichtungen zur Massiv- bzw. Blechumformen aufgrund von zwei separat ausgebildeten und dimensionierten Kupplungen zu trennen, wodurch sich beide Teilprozesse in optimierter Weise durchführen lassen. Somit ist eine unterschiedliche Auslegung der beiden Kupplungen abhängig von den individuellen Erfordernissen der beiden Teilprozesse möglich. Es ist nicht notwendig, einen Kompromiss bei der Auslegung der Kupplungen einzugehen.

Trotz der stark voneinander abweichenden und sich teilweise widersprechenden Anforderungen ermöglicht die erfindungsgemäße Kupplungsvorrichtung eine insgesamt optimale Lösung für die Übertragung des Drehmoments für den gesamten, intermittierend arbeitenden Prozess des Pressens, Scheren bzw. Stanzens.

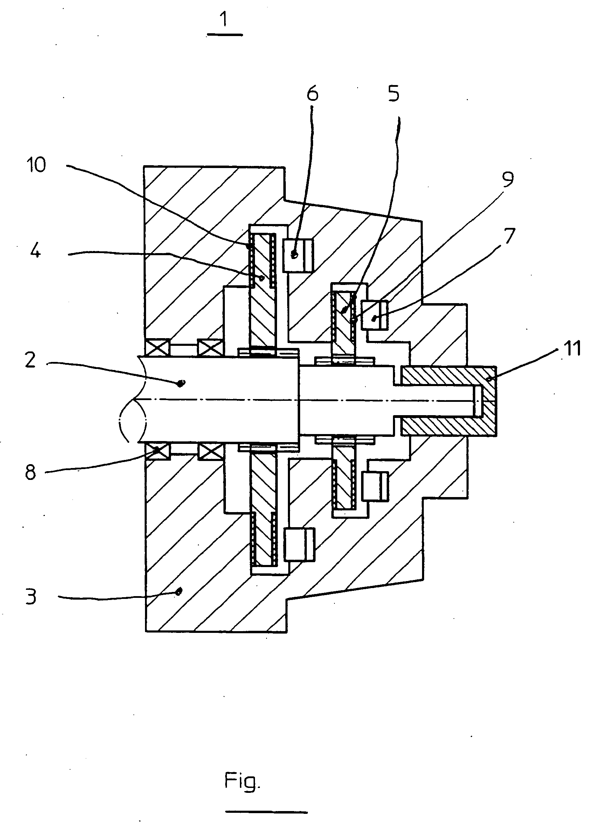

In der Zeichnung ist ein Ausführungsbeispiel der Erfindung dargestellt. Die einzige Figur zeigt schematisch den Schnitt durch eine Kupplungsvorrichtung einer Presse, Schere oder Stanzvorrichtung zur Massiv- bzw. Blechumformung.

Die Kupplungsvorrichtung 1, die in einer Presse, in einer Schere oder in einer Stanzvorrichtung zum Massiv- bzw. Blechumformen eingesetzt wird, überträgt ein Drehmoment von einem drehangetriebenen Element 3 in Form eines angetriebenen Schwungrades (Antrieb nicht dargestellt) auf ein drehanzutreibendes Element 2 in Form einer Kurbelwelle. Zu Beginn eines Stanz- bzw. Pressvorgangs steht das drehanzutreibende Element 2 zunächst still, es hat folglich die Drehzahl Null, während das drehantreibende Element 3 sich bereits mit Nenndrehzahl dreht. Die Kurbelwelle 2 ist im Schwungrad 3 konzentrisch in Lagern 8 angeordnet.

Die Übertragung der Drehbewegung des Schwungrades 3 auf die Kurbelwelle 2 erfolgt durch zwei Kupplungen 4 und 5, die nicht baugleich ausgelegt sind, sondern das Drehmoment in unterschiedlicher Weise übertragen:

Die erste Kupplung 5 ist als Nasskupplung ausgelegt, d. h. sie läuft - was in der Figur nicht näher dargestellt ist - in einem Fluid zur Wärmeabfuhr. Zum Übertragen eines Drehmoments werden Reibelemente 9, die drehfest und axial verschiebbar mit der Welle 2 verbunden sind, mittels Kolben 7 der ersten Kupplung 5 gegen das als Reibfläche ausgebildete Schwungrad 3 gepreßt. Das damit übertragbare Drehmoment reicht aus, um die Kurbelwelle 2 aus ihrer Ruheposition aus hochzufahren.

Eine zweite Kupplung 4, die parallel zur ersten Kupplung 5 angeordnet ist, arbeitet im wesentlichen ähnlich wie die erste Kupplung 5, ist jedoch für den Trockenlauf ausgelegt. Das bedeutet, dass ihre Reibelemente 10, die ebenfalls axial verschiebbar, drehfest mit der Welle 2 verbunden sind, trocken gegen die Reibfläche des Schwungrades 3 gepreßt werden und dabei einen hohen Reibwert haben. Diese Kupplung eignet sich nicht besonders zum Hochfahren der Kurbelwelle 2 aus der Ruheposition, allerdings ist sie bestens für das Übertragen eines hohen Drehmoments geeignet, wenn der Schlupf zwischen Schwungrad 3 und Kurbelwelle 2 weitgehend Null ist, d. h. die beiden Teile sich im wesentlichen mit gleicher Drehzahl drehen.

Während vor dem Anfahren der Presse, der Schere bzw. der Stanzvorrichtung die Antriebswelle 2 ruht, dreht sich das Schwungrad 3 mit Nenndrehzahl. Dann wird die erste (kleinere) Kupplung 5 betätigt, d. h. ihre Reibelemente 9 werden mit den Kolben 7, die hydraulisch oder pneumatisch arbeiten können, gegen die Reibfläche des Schwungrades 3 gepreßt. Hierdurch fährt die Antriebswelle 2 an und nähert sich mit ihrer Drehzahl derjenigen des Schwungrades 3.

Zur Medienversorgung der Kupplungsvorrichtung 1, insbesondere der Kupplungen 4, 5, ist ein Drehanschluss 11 zur Medienzufuhr (Druckluft, Hydrauliköl) vorgesehen.

Sobald die Antriebswelle 2 eine hinreichende Drehzahl aufweist, wird die zweite (größere) Kupplung 4 aktiviert, indem deren Reibelemente 10 in analoger Weise zu den Reibelementen 9 betätigt werden. Hierdurch wird es nunmehr möglich, ein hohes Drehmoment vom Schwungrad 3 auf die Antriebswelle 2 zu übertragen.

Dieses spezielle Konzept unterscheidet sich folglich grundsätzlich von vorbekannten Doppelkupplungen für die genannten Anwendungsfälle. Alle bewegungskontrollierenden bzw. bewegungsbestimmenden Funktionen sind voneinander getrennt. Die erste Kupplung 5 betrifft den dynamischen Beschleunigungsvorgang des Systems, während die zweite Kupplung 4 im wesentlichen der Übertragung eines hohen Drehmoments dient.

Bis zum Erreichen der Synchrondrehzahl von Schwungrad 3 und Antriebswelle 2 wird in der ersten Kupplung 5 Reibungswärme erzeugt, und zwar abhängig von der Reibzeit und der Häufigkeit der Beschleunigungsvorgänge je Zeiteinheit. Diese Reibungswärme wird dadurch sehr gut abgeführt, dass die erste Kupplung 5 als Nasskupplung ausgebildet ist, d. h. das Kupplungsfluid kann die Reibwärme gut abführen.

Bei schnelllaufenden Pressen mit hohen Schaltzahlen ist die kritische Dimensionierungsgröße für das Kupplungssystem die thermische Stabilität. Um die Schaltwärme abzuführen, werden die Elemente entweder indirekt luft- bzw. wassergekühlt oder als nasslaufende Schaltelemente ausgeführt, wie dies im Falle der ersten Kupplung 5 gegeben ist.

Exzenter- und Kurbelpressen für die Massivumformung werden meist im Schaltbetrieb gefahren, d. h. ein ständig rotierendes Schwungrad wird zyklisch mit dem Kurbeltrieb für einen Hub verbunden. Diese Pressen besitzen daher eine Bremse und eine Kupplung, die bei jedem Hub wirksam werden. Die Kupplungen 4, 5 erfüllen neben der oben beschriebenen Beschleunigungsfunktion weiterhin die Aufgabe, den Reibschluss zwischen Schwungmasse und Kurbeltrieb während des Pressvorganges aufrecht zu erhalten, wozu im Ausführungsbeispiel im wesentlichen die zweite Kupplung 4 dient. Nur im Falle der Überlastung der Presse bzw. bei Überschreiten des Grenzdrehmoments findet hier eine Relativbewegung zwischen Schwungrad 3 und Kurbelwelle 2 in Form von Rutschen (Schlupf) statt. Das hierzu erforderliche Drehmoment beträgt in der Regel das Drei- bis Vierfache des Anfahrdrehmoments. Das bedeutet im vorliegenden Ausführungsbeispiel, dass die zweite Kupplung 4 mindestens das Drei- bis Vierfache des Drehmoments übertragen kann, das von der ersten Kupplung 5 übertragen wird.

Die Dimensionierungsgröße für diesen Betriebsfall ist nicht die thermische Belastung, sondern das Nenndrehmoment, da ein Rutschen in der Regel nicht stattfindet. Daher ist die zweite Kupplung 4 erfindungsgemäß als Trockenkupplung ausgebildet.

Die Vorteile bestehen im wesentlichen in der Trennung der beiden Aufgaben "Anfahren" und "Drehmomentübertragen" bei einem Kupplungssystem, wobei eine auf thermische Belange ausgelegte erste Kupplung 5 (Beschleunigungskupplung) als Nasskupplung eingesetzt wird, sowie eine für die zweite Funktion der Drehmomentübertragung eingesetzte zweite Kupplung 4, die als Trockenkupplung ausgebildet ist. Beide Kupplungen 4, 5 können separat betätigt werden. Dadurch ist es beispielsweise auch möglich, für Einrichtfunktionen die Presse nur mit der ersten Kupplung 5 zu betreiben.

### Bezugszeichenliste:

- 1: Kupplungsvorrichtung
- 2: drehanzutreibendes Element (Kurbelwelle)
- 3: drehantreibendes Element (Schwungrad)
- 4: erste Kupplung (Reibbelagträger)
- 5: zweite Kupplung (Reibbelagträger)
- 6: Kolben
- 7: Kolben
- 8: Lager
- 9: Reibbelag
- 10: Reibbelag
- 11: Drehanschluss zur Medienzufuhr

## Patentansprüche

1. Kupplungsvorrichtung (1) zum Ankuppeln eines drehanzutreibenden Elements (2) an ein drehantreibendes Element (3) in einer mechanischen Presse, Schere oder Stanzvorrichtung zur Massiv- und /oder Blechumformung, wobei die Kupplungsvorrichtung (1) in Parallelschaltung unabhängig voneinander schaltbare Reibkupplungen (4, 5) aufweist,
**dadurch gekennzeichnet,**
**dass** die beiden Kupplungen (4, 5) auf dem drehanzutreibenden Element (2) axial im Abstand nebeneinander und gemeinsam in dem drehantreibenden Element (3) angeordnet sind, jede Kupplung (4, 5) Reibelemente (9, 10) aufweist, die beide unabhängig voneinander mit einer jeweils wählbaren Anpresskraft gegen das drehantreibende Element (3) beaufschlagbar sind und wobei die eine Kupplung (4) als Trocken-Reibkupplung und die andere Kupplung (5) als Nass-Reibkupplung ausgebildet ist.

2. Kupplungsvorrichtung nach Anspruch 1,
**dadurch gekennzeichnet,**
**dass** die Nasskupplung (5) im Vergleich mit der Trockenkupplung (4) höchstens ein Drittel, vorzugsweise höchstens ein Viertel, des maximalen Drehmoments überträgt.

3. Kupplungsvorrichtung nach Anspruch 1 oder 2,
**dadurch gekennzeichnet,**
**dass** zur Beaufschlagung der Reibelemente (9, 10) ein pneumatisch oder hydraulisch arbeitender Aktuator vorgesehen ist.

## Claims

1. A clutch device (1) for coupling an element (2) to be rotationally driven to a rotationally driving element (3) in a mechanical press, shearing or punching machine for massive forming and/or sheet metal forming, wherein the clutch device (1) features friction clutches (4, 5) that are connected in parallel and can be actuated independently of one another,
**characterized in**
**that** the two clutches (4, 5) are adjacently arranged and axially spaced apart from one another on the element (2) to be rotationally driven and jointly arranged in the rotationally driving element (3), and in that each clutch (4, 5) features fiction elements (9, 10) that can be pressed against the rotationally driving element (3) independently of one another with a respectively selectable pressing force, wherein one clutch (4) is realized in the form of a dry friction clutch and the other clutch (5) is realized in the form of a wet friction clutch.

2. The clutch device according to Claim 1,
**characterized in**
**that** the wet clutch (5) transmits no more than one-third, preferably no more than one-fourth of the maximum torque of the dry clutch (4).

3. The clutch device according to Claim 1 or 2,
**characterized in**
**that** a pneumatically or hydraulically operated actuator is provided for acting upon the friction elements (9, 10).

## Revendications

1. Dispositif d'accouplement (1) pour coupler un élément (2) à entraîner par rotation à un élément (3) entraînant par rotation dans une presse , une cisaille ou un dispositif perforateur mécanique pour la formation de pièces massives et/ou de tôles, le dispositif d'accouplement (1) présentant des accouplements à friction pouvant être montés en parallèle et indépendants les uns des autres, **caractérisé en ce que** les deux accouplements (4, 5) sont placés axialement à distance l'un de l'autre sur l'élément (2) à entraîner par rotation et ensemble dans l'élément (3) entraînant par rotation , chaque accouplement (4, 5) présente des éléments à friction (9, 10) qui peuvent être sollicités contre l'élément (3) entraînant par rotation indépendamment l'un de l'autre par une force d'application sélectionnable respectivement et l'un accouplement (4) étant formé comme accouplement à friction sec et l'autre accouplement (5) comme accouplement à friction humide.

2. Dispositif d'accouplement selon la revendication 1, **caractérisé en ce que** l'accouplement humide (5) en comparaison à l'accouplement sec (4), transmet au plus un tiers, de préférence au plus un quart, du couple de rotation maximal.

3. Dispositif d'accouplement selon la revendication 1 ou 2, **caractérisé en ce que** pour solliciter les éléments à friction (9, 10), un actionneur à fonctionnement pneumatique ou hydraulique est prévu.
